# EUROPÄISCHE PATENTSCHRIFT

(11) **EP 1 440 842 B1**
(45) Veröffentlichungstag und Bekanntmachung des Hinweises auf die Patenterteilung: **21.12.2005**
(21) Anmeldenummer: 03001693.5
(22) Anmeldetag: 25.01.2003
(51) Int. Cl.: B60P 1/44

(54) **Unterfahrbare Hubladebühne mit Führungswerk**
Suspended loading tailgate with guiding system
Hayon élévateur avec plate-forme suspendue et système de guidage

(43) Veröffentlichungstag der Anmeldung: 28.07.2004
(73) Patentinhaber: Bär, Gerd, 74078 Heilbronn (DE)
(72) Erfinder: Bär, Gerd, 74078 Heilbronn (DE)
(74) Vertreter: Kohler Schmid Möbus

(56) Entgegenhaltungen:
- EP-A- 0 662 405
- EP-A- 0 700 806
- FR-A- 2 760 216

## Beschreibung

Die vorliegende Erfindung betrifft eine Hubladebühne für ein Fahrzeug gemäß dem Oberbegriff des Patentanspruchs 1, insbesondere für Zentralachs- oder Sattelanhänger mit als Doppel-T-Profil ausgebildeten Langträgern mit der zum Standard gewordenen Rahmenspur von 1300 mm.

Eine derartige Hubladebühne ist beispielsweise durch die FR 2 760 216 A1 bekannt geworden.

Hubladebühnen sind an LKWs oder Anhänger montiert und dienen zu deren Be- und Entladung. Unterfahrbare Hubladebühnen sind mittels eines Führungswerks am Fahrgestell montiert und können nach ein- oder zweimaligem Falten der Plattform vollständig unter den Anbau bzw. Fahrgestellrahmen gefahren werden, so dass sie an keiner Stelle nach hinten über den Aufbau hinausragen und stören könnten. Derartige unterfahrbare Hubladebühnen werden für Fahrzeuge mit Wechselaufbauten und alle Fahrzeuge, die an Verladeschleusen von Kühlhäusern andocken müssen, gebraucht. Hubladebühnen dieser Gattung haben für den horizontalen Verfahrweg in aller Regel Gleit- oder Rollenführungen. Die Bewegung der an entsprechenden Schlitten aufgehängten Hubladebühnen erfolgt mit einem Verschiebezylinder oder einem Lineargetriebe.

Aus der eingangs genannten FR 2 760 216 A1 ist eine unterfahrbare Hubladebühne bekannt, bei der das Führungswerk quer zur Fahrtrichtung aus zwei Rechteckrohren besteht, die in Fahrtrichtung mit je zwei Flachmaterialien pro Seite zusammengeschweißt sind. Zwischen den beiden Stegen liegt die außen liegende Führung der Hubladebühne mit einem Rohr (in der Zeichnung nicht gezeigt) als Führungsschiene und mit einer Führungsbuchse, die mit dem Tragrohr als Schlitten verbunden ist. Das Rohr oder ein volles Rundmaterial muss außen präzise bearbeitet und rostgeschützt sein, in der Qualität einer Kolbenstange. Eine derartige Konstruktion ist extrem schwer, in erster Linie aufgrund der Tatsache, dass als "Führungsschiene" ein Rundmaterial verwendet wird, welches von der Biegefestigkeit her einen ungünstigen Querschnitt hat. Ein weiterer Nachteil dieser Konstruktion besteht darin, dass die "Führungsschiene" nur an ihren Enden befestigt ist und dazwischen keine Abstützungen erlaubt. Um die Durchbiegung dieser Führungsschiene möglichst niedrig zu halten, kann zusätzlich nur mit niedrigen Spannungen gearbeitet werden, was weiter gewichtstreibend wirkt. Aufgrund des großen Hebelverhältnisses wirkt sich die Elastizität natürlich direkt auf die Plattform aus. Zusätzlich zu den Führungsschienen als Rundrohr sind als Verbindung vier massive Flachmaterialien, zwei pro Seite, vorgesehen, die die beiden Querträger als komplette Einheit miteinander verbinden. Das Rundrohr kann nicht eingeschweißt werden, sondern ist mit einer Flanschverbindung eingeschraubt, um es bei Korrosion, Verschleiß etc. als Ersatz austauschen zu können. Der gesamte Rahmen hat eine Abmessung von ca. 2 m x 1,80 m, so dass es sich also um ein schwer handhabbares Großschweißteil handelt.

Bei jedem Nutzfahrzeugzubehör ist das Eigengewicht ein ganz wichtiger Faktor, denn bei limitiertem Gesamtgewicht geht jedes Zubehörgewicht von der Nutzlast ab. Aus diesem Grund verlangt der Markt gewichtsgünstige Produkte, die auch noch günstig herzustellen sind. Selbstverständlich muss bei Nutzfahrzeugen eine entsprechende Robustheit, Unempfindlichkeit und gute Funktionalität gewährleistet sein.

Der Erfindung liegt daher die Aufgabe zugrunde, bei einer Hubladebühne der eingangs genannten Art das Gewicht zu reduzieren.

Diese Aufgabe wird erfindungsgemäß durch eine Hubladebühne gemäß dem Patentanspruch 1 gelöst.

Als Führungsschienen werden beispielsweise stranggepresste Aluminiumprofile mit einer innen liegenden Führung verwendet, in der ein das Hubwerk tragender Schlitten verfahrbar geführt ist. Durch das Eloxieren der Aluminiumprofile erhält die Oberfläche die notwendige Härte und Verschleißfreiheit für eine wartungsfreie Führung. Die Verwendung von Aluminiumschienen gibt eine Gewichtsersparnis gegenüber außen liegenden Rundführungen von mindestens 70%. Die Hecktraverse ist vorzugsweise ein preisgünstiges Laser- und Kantteil aus Stahl, welches nach der Oberflächenbehandlung unmittelbar zur Montage bereit steht. An der Hecktraverse sind die Führungsschienen durch Stecken und Klemmen befestigt. Durch die formschlüssige Steckverbindung werden die auf die Führungsschienen wirkenden Kräfte auf die Hecktraverse abgeleitet. Dasselbe gilt für die Stirntraverse, die noch das Gegenlager für den Verschiebezylinder hat und daher bevorzugt ein Schweißteil ist. Die Stirntraverse ist eine relativ kleine Schweißbaugruppe. Die Verbindung zu den Heck- und Stirntraversen durch Formschluss und Klemmen ermöglicht das Zusammenbringen des sperrigen Führungswerks erst in der letzten Fertigungsstufe der Endmontage.

Alle Bauteile haben eine lange, schlanke Form und benötigen daher geringen Platzbedarf für interne Lagerung und Transport. Das Gesamtgewicht der kompletten erfindungsgemäßen Hubladebühneneinheit mit Führungswerk und einer Plattform von 1695 x 2400 mm mit einer Tragfähigkeit von 2000 kg beträgt 490 kg, während das Gewicht von Hubladebühnen nach dem Stand der Technik zwischen 750 und 800 kg liegt.

Vorzugsweise liegen die Heck- und die Stirntraverse an der Unterseite der Langträger an, während die Führungsschienen von den Langträgern beabstandet sind und über dazwischen angeordnete Schraubenköpfe von Klemmschrauben an der Unterseite der Langträger anliegen, um ein Durchbiegen der Führungsschienen nach oben zu verhindern. Mit diesen Klemmschrauben sind die Führungsschienen an der Stirntraverse und an einer zwischen Heck- und Stirntraverse angeordneten Mittentraverse des Führungswerks festgeklemmt. Vorteilhaft erfolgt diese Klemmbefestigung mittels Klemmplatten, die in ein oberes Profilfach der Führungsschiene eingefügt und mittels der Klemmschrauben, welche einen oberseitigen Schlitz des oberen Profilfaches durchgreifen, mit der Stirn- und der Mittentraverse verbunden sind.

Weitere vorteilhafte Ausgestaltungen der Erfindung sind Gegenstand der Unteransprüche. Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine Seitenansicht der erfindungsgemäßen Hubladebühne für einen Zentralachs- oder Sattelanhänger in ihrer Fahrposition mit untergefahrenem Hubwerk;
- Fig. 2: die erfindungsgemäße Hubladebühne in ihrer Arbeitsposition mit nach hinten ausgefahrenem Hubwerk in einer Ansicht analog zu Fig. 1;
- Fig. 3: die isometrische Draufsicht auf das Führungswerk der erfindungsgemäßen Hubladebühne mit teilweise eingefahrenem Hubwerk ohne Zylinder und ohne Plattform, mit einseitiger Andeutung des Langträgers des Fahrgestells;
- Fig. 4: eine Detailansicht gemäß IV in Fig. 3; die die Verbindung einer Führungsschiene und einer Stirntraverse des Führungswerks in isometrischer Darstellung zeigt;
- Fig. 5: eine Detailansicht gemäß V in Fig. 3, die die Verbindung einer Führungsschiene mit einer Hecktraverse des Führungswerks in isometrischer Darstellung zeigt; und
- Fig. 6: eine Detailansicht gemäß VI in Fig. 3, die die Verbindung einer Führungsschiene mit einer Mittentraverse des Führungswerks in einer Schnittdarstellung zeigt.

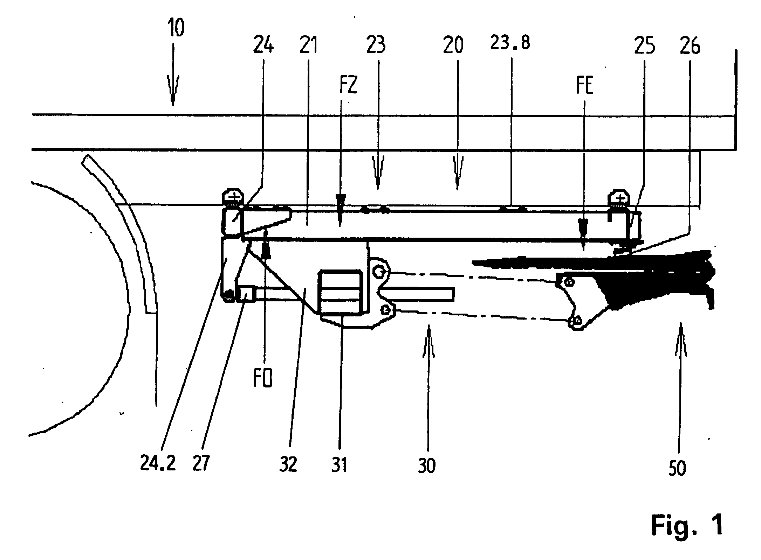

**Fig.** 1 zeigt die Hubladebühne in ihrer Fahrposition mit untergefahrenem Hubwerk **30** und eingefalteter Plattform **50**, angebaut an das Heck eines Sattelaufliegers (Trailer) **10**. Das Hubwerk 30 mit der Plattform 50 ist in einem rahmenförmigen Führungswerk **20** verfahrbar geführt, das unten an den beiden Langträgern **11** des Trailers 10 befestigt ist. Das Führungswerk 20 umfasst eine Stirntraverse **24,** eine Hecktraverse **25** und eine Mittentraverse **23**, die jeweils an den Langträgern **11** befestigt sind, sowie zwei Führungsschienen **21**, in denen das Hubwerk 30 jeweils über einen Schlitten **32** und nicht gezeigte Führungselemente hängend gehalten und verfahrbar ist. Zum Verschieben des Hubwerks 30 dient der Verschiebezylinder **27**, der in nicht dargestellter Form mit dem Tragrohr **31** des Hubwerks 30 verbunden ist. Die Kolbenstange des Verschiebezylinders 27 ist über die Konsole **24.2** mit der Stirntraverse 24 verbunden.

Das Gewicht von Hubwerk 30 und Plattform 50 erzeugt an der Führungsschiene 21 die Zugkraft **FZ** und die Druckkraft **FD**. Der Schwerpunkt des Eigengewichts von Hubwerk 30 und Plattform 50 liegt im Bereich von **FE.** Beim Verstauvorgang wird das Hubwerk 30 mit der eingefalteten Plattform 50 unter die Langträger 11 verfahren, und dann wird durch die Hubwerksfunktion "Heben" die Plattform 50 gegen Gummipuffer **26** der Hecktraverse 25 hochgefahren, um die Hubladebühne zu verspannen. Dadurch vergrößern sich natürlich die Kräfte, die in FZ und FD wirken, bis zum Höchstwert der von der Hubwerkshydraulik erzeugten Kräfte.

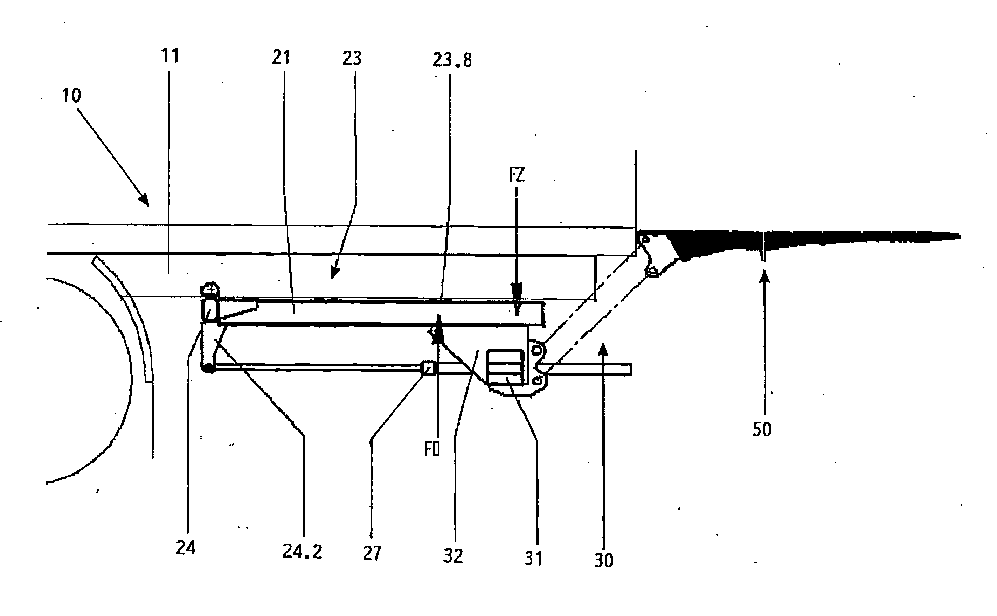

**Fig. 2** zeigt die Hubladebühne in ihrer Arbeitsposition mit nach hinten ausgefahrenem Hubwerk 30 und aufgeklappter Plattform 50.

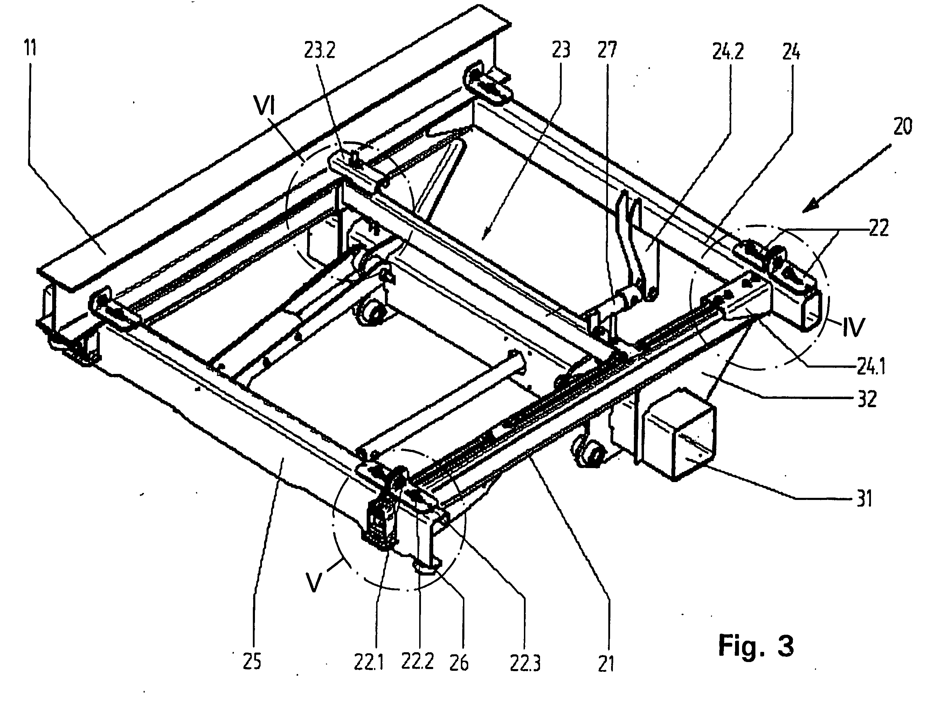

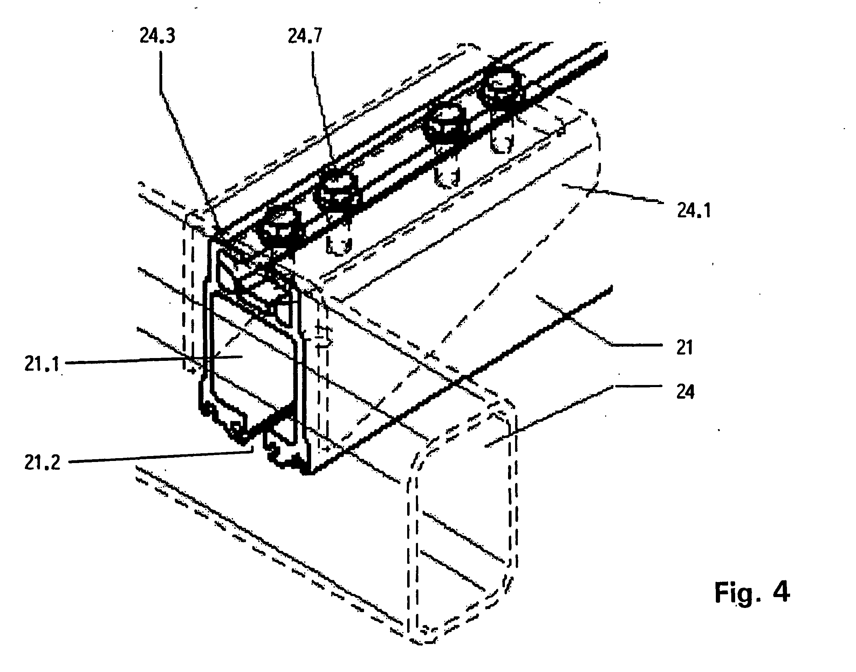

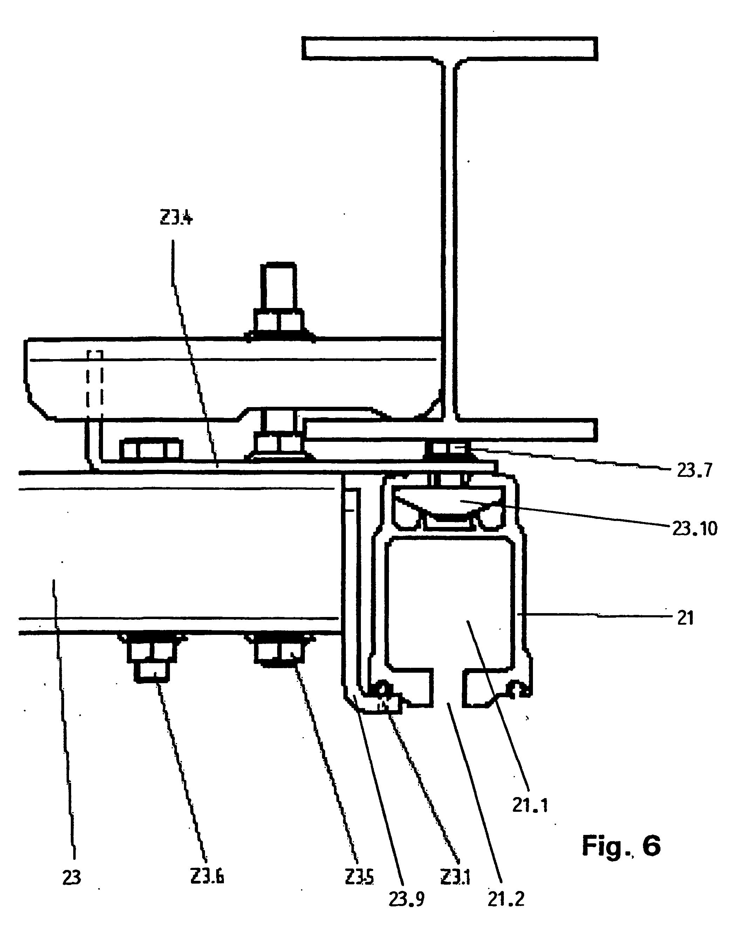

In **Fig. 3** ist das Führungswerk 20 gezeigt, das an den als Doppel-T-Profil ausgebildeten Langträgern 11 mit der zum Standard gewordenen Rahmenspur von 1300 mm befestigt ist. Die Stirntraverse 24 und die Hecktraverse 25 liegen, wie auch in Fig. 1 zu erkennen, direkt an der Unterseite des Langträgers 11 an. Die Führungsschienen 21 sind hingegen um die Kopfhöhe von Klemmschrauben **23.7**, **24.7** (Fign. 4 und 6) und um die Dicke eines Befestigungselements (Traversenschuhs) **24.1**, einer abgewinkelten Anlageplatte **23.4** (Fig. 6) und eines Distanzflansches **23.8** (Fig. 1) von der Unterseite der Langträger 11 beabstandet. Damit bilden die Stirntraverse 24, die Hecktraverse 25 und alle Schraubenköpfe der Klemmschrauben 23.7, 24.7 eine Ebene.

Die Führungsschienen 21 sind jeweils durch ein Strangpressprofil aus Aluminium gebildet, welches nur abgelängt wird. Wie in den Fign. 4 bis 6 gezeigt ist, weist die Führungsschiene 21 ein unteres Profilfach **21.1** mit einem bodenseitigen Führungsschlitz **21.2** und oberes Profilfach **21.3** mit einem oberseitigen Schlitz **21.4** auf. Im unteren Profilfach 21.1 sind die nicht gezeigten Führungselemente des Schlittens 32 geführt, der den Führungsschlitz 21.2 durchragt.

**Fig. 4** zeigt die Verbindung der Führungsschiene 21 mit der Stirntraverse 24. Die Führungsschienen 21 stoßen stumpf an die Seitenwand der Stirntraverse 24 an, die mit dem nach unten offenen, U-förmigen Befestigungselement 24.1 verschweißt ist. Dieser umgreift von oben die Führungsschiene 21. Die Klemmverbindung der Führungsschiene 21 mit dem Befestigungselement 24.1 erfolgt mittels einer Klemmplatte **24.3,** die in das obere Profilfach 21.3 der Führungsschiene 21 eingefügt und mittels der Klemmschrauben 24.7, welche den oberseitigen Schlitz 21.4 des oberen Profilfaches 21.3 durchgreifen und in die Klemmplatte 24.3 eingeschraubt sind.

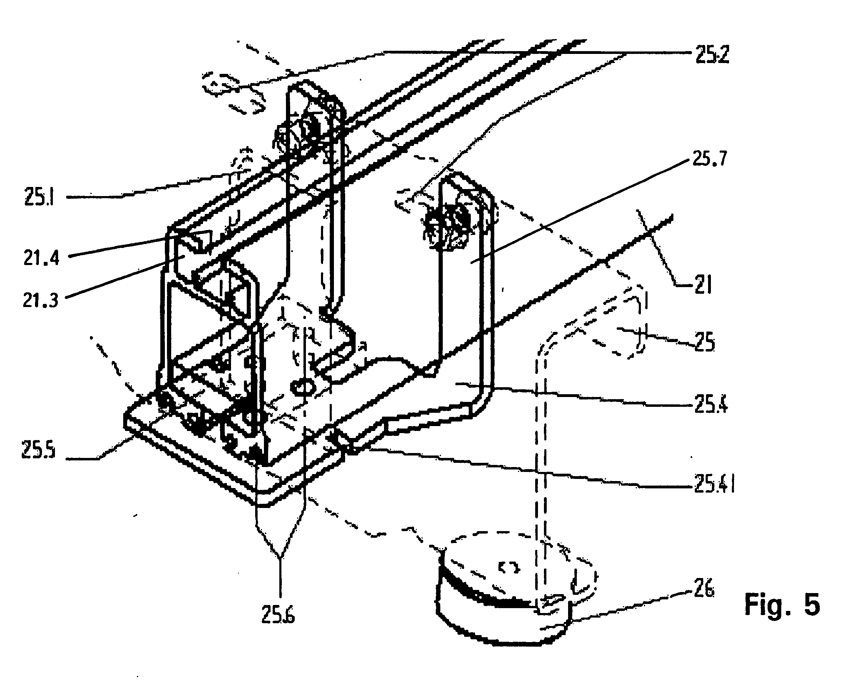

**Fig. 5** zeigt die Verbindung der Führungsschiene 21 mit der Hecktraverse 25. Die Führungsschiene 21 ist in eine ihrem Außenquerschnitt entsprechende Ausnehmung **25.1** der Hecktraverse 25 formschlüssig gesteckt und befestigt. Der Boden der Ausnehmung 25.1 ist durch eine Auflageplatte **25.4** gebildet, die beidseitig über die Ausnehmung 25.1 übersteht. Die Auflageplatte 25.4 ist durch den auf dem Grund der Ausnehmung 25.1 aufliegenden, einen Schenkel eines Fixierwinkels gebildet, dessen anderer gabelförmiger Schenkel **25.7** an die Hecktraverse 25 angeschraubt ist. Die Führungsschienen 21 sind auf den Auflageplatten 25.4 jeweils mittels einer Klemmplatte **25.5** festgeklemmt, die in das untere Profilfach 21.1 der Führungsschiene 21 eingefügt und mittels Klemmschrauben **25.6**, welche den Führungsschlitz 21.2 durchgreifen, mit der Auflageplatte 25.4 verbunden ist. Die Hecktraverse 25 ist ein Kantteil und hat die Ausnehmung 25.1, die sich auf den Steg erstreckt. Die L-förmige Abkantung ist ganz unterbrochen. Auf dem Grund der Ausnehmung 25.1 im senkrechten Steg liegt die Auflageplatte 25.4, die mit seitlichen Ausnehmungen **25.41** in die Stegwand der Hecktraverse 25 eingreift. Nach dem Einlegen der Auflageplatte 25.4 entspricht der Rest der Ausnehmung 25.1 genau dem Querschnitt der Führungsschiene 21. Diese wird zur Montage in die Ausnehmung 25.1 eingeführt und danach die Klemmplatte 25.5 in das untere Profilfach 21.1 eingefügt. Mit den Schrauben 25.6 wird dann die Auflageplatte 25.4 durch die unten offene Führungsschiene 21 mit der Klemmplatte 25.5, die ein Innengewinde hat, verschraubt.

**Fig. 6** zeigt die Verbindung der Führungsschiene 21 mit der rohrförmigen Mittentraverse 23, die die Führungsschienen 21 horizontal und vertikal stabilisiert. Die Mittentraverse 23 hat an ihren beiden Enden jeweils einen L-förmigen Winkel **23.9** mit Ausnehmungen, in welche Rastzapfen **23.1** eingesteckt sind und mit ihrem nach oben ragenden Bereich in einen kreuzförmigen Schlitz der Führungsschiene 21 eingreifen. Die Mittentraverse 23 selbst wird beim Zusammenbau mit der abgewinkelten Anlageplatte 23.4 durch Ankerschrauben **23.5** und die Schraube **23.6** verbunden. Dabei stützt die Mittentraverse 23 mit dem L-förmigen Winkel 23.9 und der Anlageplatte 23.4 die Führungsschiene 21 oben und unten ab. Die Führungsschienen 21 sind an die Anlageplatte 23.4 mittels einer Klemmplatte **23.10** festgeklemmt, die in das oberes Profilfach 21.3 der Führungsschiene 21 eingefügt und mittels der Klemmschrauben 23.7, welche den oberseitigen Schlitz 21.4 des oberen Profilfaches 21.3 durchgreifen, mit der Anlageplatte 23.4 verbunden ist.

Durch die stirn- und heckseitigen Verbindungen der Führungsschienen 21 mit der Stirntraverse 24 und der Hecktraverse 25 wird das Führungswerk 20 nach Fig. 3 gebildet. Mit dieser Technik sind die leichten Führungsschienen 21 mit der Stirntraverse 24 und Hecktraverse 25 zum Führungswerk 20 verbunden. Das gesamte Führungswerk 20 wird, wie in Fig.3 gezeigt, mit Flanschpratzen **22**, die an Stirn- und Hecktraversen 24, 25 angebracht sind, am unteren Flansch der Langträger 11 jeweils beiderseits des unteren Flansches des Langträgers 11 mittels Klemmschrauben **22.2** befestigt. Die Mittentraverse 23 hingegen hat lediglich Klemmpratzen **23.2**, die jeweils nur von innen den unteren Flansch des Langträgers 11 umgreifen. Die Mittentraverse 23 wird, wie auch in Fig. 3 gezeigt, montiert und versandfertig ausgeliefert. Nach der Montage des Führungswerks 20 an das Fahrzeug in der bereits beschriebenen Weise muss noch die Mittentraverse 23 mit der Klemmpratze 23.2 durch den überstehenden Teil der Ankerschraube 23.5 mit dem inneren Flanschteil der Langträger 11 verbunden werden. Wie Fig. 6 zeigt, bietet hierbei der vertikal abgewinkelte Schenkel der Anlageplatte 23.4 das Gegenlager für die Klemmpratze 23.2. Die Ausführung ist so gewählt, um die unterschiedlichen Flanschstärken der Langträger 11 universell ausgleichen zu können.

Vor dem Zusammenbau des Führungswerks 20 in der beschriebenen Weise ist selbstverständlich das Hubwerk 30 mit seinen Schlitten 32 und den nicht näher dargestellten Führungselementen in das untere Profilfach 21.1 der Führungsschiene 21 eingeführt worden.

Die Flanschbreiten der Langträger 11 variieren zwischen 100 und 140 mm, die Flanschdicken zwischen 8 und 12 mm. Aufgrund dieses Umstandes muss die Befestigung auf diese Belange einstellbar sein. Daher haben die Flanschpratzen 22, die Stirntraverse 24 und die Schlusstraverse 25 Langlöcher (z.B. **25.2** in Fig. 5), die es ermöglichen, die Klemmschrauben 22.2 bei der jeweils vorliegenden Flanschbreite immer am Flanschrand des Langträgers 11 zu positionieren. Damit wird die Biegebeanspruchung der zu verbindenden Teile minimiert. Das Distanzelement **22.3** dient lediglich zum Einstellen der Flanschstärke und als Gegenhaltung für die Klemmwirkung der Klemmschraube 22.2. Die Befestigung bekommt ihre endgültige Stabilität durch Anschrauben der Flanschpratzen 22 an den Steg des Langträgers 11 mittels Stegschraube **22.1**.

Die komplette Hubladebühne wird in der in Fig. 1 gezeigten Fahrstellung komplett montiert an die Fahrzeugbaufirma angeliefert. Die Montage erfolgt dadurch, dass das komplette Hubladebühnenpaket mit Wagenheber oder ähnlichem unterhalb der Langträger 11 platziert wird. Mit den leicht lose montierten Flanschpratzen 22 im Bereich der Stirntraverse 24 und der Schlusstraverse 25 ohne die Stegschrauben 22.1 "hängt" die komplette Hubladebühne noch verschiebbar an den Langträgern 11. Durch die elektrische Inbetriebnahme kann die Plattform 40 auf Ladebodenniveau hochgefahren werden. Durch Längsverschieben der gesamten Hubladebühne kann jetzt auch die vertikale Positionierung an der Ladekante erfolgen. Endgültig fixiert wird die Hubladebühne durch Festziehen aller Klemmschrauben 22.2 und der Stegschrauben 22.1. Für letztere muss vorher der Steg der Langträger 11 gebohrt werden.

In der Fahrposition (Fig. 1) wirkt die Kraft FD über die nicht gezeigten Führungselemente auf die Führungsschiene 21, die sich mittelbar über den Befestigungselement 24.1 und dem Kopf der Klemmschrauben 23.7, 24.7 am Flansch des Langträgers 11 abstützt. Die Kraft FZ wirkt über die nicht gezeigten Führungselemente auf die L-förmigen Schenkel der Führungsschiene 21, die ihrerseits durch die Mittentraverse 23 mit dem jeweiligen inneren Teil des Flansches des Langträgers 11 befestigt ist. Die kräftemäßige Betrachtung in der Arbeitsstellung (Fig. 2) zeigt, dass die Druckkräfte FD vom Schlitten 32 bzw. deren nicht gezeigten Führungselemente an der Stelle FD in die Führungsschiene 21 eingeleitet werden. Diese wiederum stützt sich mittelbar über den Distanzflansch 23.8 und den Kopf der Klemmschraube 23.7 am unteren Flansch des Langträgers 11 ab. Die Zugkräfte FZ werden in gleicher, jedoch umgekehrter Weise durch die nicht gezeigten Führungselemente auf die L-förmigen Schenkel der Führungsschiene 21 in direkter Nähe der Hecktraverse 25 eingeleitet, in die die Führungsschiene 21 formschlüssig eingebunden ist.

## Patentansprüche

1. Unterfahrbare Hubladebühne für ein Fahrzeug, umfassend ein Hubwerk (30) zum Heben und Senken einer Plattform (50) und ein rahmenförmiges Führungswerk (20) mit einer Stirn- und einer Hecktraverse (24, 25) zur Befestigung an Langträgern (11) des Fahrzeugs und mit zwei Führungsschienen (21), an denen das Hubwerk (30) hängend gehalten und zwischen einer hinter dem Fahrzeug befindlichen Arbeitsstellung und einer unter dem Fahrzeug befindlichen Fahrstellung verfahrbar ist,
**dadurch gekennzeichnet,**
**dass** die Führungsschienen (21) jeweils durch ein offenes Hohlprofil aus Metall, insbesondere aus Aluminium, gebildet und in eine dem Außenquerschnitt der Führungsschiene (21) entsprechende Ausnehmung (25.1) der Hecktraverse (25) gesteckt und an der Hecktraverse (25) befestigt sind.

2. Hubladebühne nach Anspruch 1, **dadurch gekennzeichnet, dass** der Boden der Ausnehmung (25.1) durch eine Auflageplatte (25.4) der Hecktraverse (25) gebildet ist, die ein- oder beidseitig über die Ausnehmung (25.1) übersteht.

3. Hubladebühne nach Anspruch 2, **dadurch gekennzeichnet, dass** die Auflageplatte (25.4) durch den auf dem Grund der Ausnehmung (25.1) aufliegenden einen Schenkel eines Fixierwinkels gebildet ist, dessen anderer Schenkel (25.7) an der Hecktraverse (25) befestigt ist.

4. Hubladebühne nach Anspruch 2 oder 3, **dadurch gekennzeichnet, dass** die Führungsschienen (21) an den Auflageplatten (25.4) jeweils mittels einer Klemmplatte (25.5) festgeklemmt sind, die in ein unteres Profilfach (21.1) der Führungsschiene (21) eingefügt und mittels Schrauben (25.6), welche einen bodenseitigen Führungsschlitz (21.2) des unteren Profilfaches (21.1) durchgreifen, mit der Auflageplatte (25.4) verbunden ist.

5. Hubladebühne nach einem der vorhergehenden Ansprüche, **dadurch gekennzeichnet, dass** die Heck- und die Stirntraverse (24, 25) an der Unterseite der Langträger (11) anliegen.

6. Hubladebühne nach einem der vorhergehenden Ansprüche, **dadurch gekennzeichnet, dass** die Führungsschienen (21) oben jeweils an einen übergreifenden, insbesondere nach unten offenen U-förmigen, Befestigungselement (24.1) der Stirntraverse (24) mittels einer Klemmplatte (24.3) festgeklemmt sind, die in ein oberes Profilfach (21.3) der Führungsschiene (21) eingefügt und mittels Klemmschrauben (24.7), welche einen oberseitigen Schlitz (21.4) des oberen Profilfaches (21.3) durchgreifen, mit dem Befestigungselement (24.1) verbunden ist.

7. Hubladebühne nach Anspruch 6, **dadurch gekennzeichnet, dass** die Führungsschienen (21) um die Kopfhöhe der Klemmschrauben (24.7) und die Dicke des Befestigungselements (24.1) von der Unterseite der Langträger (11) beabstandet sind.

8. Hubladebühne nach einem der vorhergehenden Ansprüche, **dadurch gekennzeichnet, dass** das Führungswerk (20) zwischen Heck- und Stirntraverse (24, 25) eine Mittentraverse (23) aufweist, die an den Langträgern (11) festgeklemmt ist und die Führungsschienen (21) unterseitig und/oder oberseitig abstützt.

9. Hubladebühne nach Anspruch 8, **dadurch gekennzeichnet, dass** die Führungsschienen (21) oben jeweils an eine übergreifende Anlageplatte (23.4) der Mittentraverse (23) mittels einer Klemmplatte (23.10) festgeklemmt sind, die in ein oberes Profilfach (21.3) der Führungsschiene (21) eingefügt und mittels Klemmschrauben (23.7), welche einen oberseitigen Schlitz (21.4) des oberen Profilfaches (21.3) durchgreifen, mit der Anlageplatte (23.4) verbunden ist.

10. Hubladebühne nach Anspruch 9, **dadurch gekennzeichnet, dass** die Führungsschienen (21) um die Kopfhöhe der Klemmschrauben (23.7) und die Dicke der Anlageplatte (23.4) von der Unterseite der Langträger (11) beabstandet sind.

## Claims

1. Retractable loading platform for a vehicle, comprising a lifting mechanism (30) for raising and lowering a platform (50) and a frame-like guide mechanism (20) having a front and rear crossmember (24, 25) to be fixed to longitudinal chassis members (11) of the vehicle, and having two guide rails (21), on which the lifting mechanism (30) is held suspended and can be moved between a working position located behind the vehicle and a travelling position located under the vehicle, **characterized in that** the guide rails (21) are in each case formed by an open hollow profile made of metal, in particular of aluminium, and are plugged into a recess (25.1) in the rear crossmember (25) corresponding to the external cross section of the guide rail (21) and are fixed to the rear crossmember (25).

2. Loading platform according to Claim 1, **characterized in that** the bottom of the recess (25.1) is formed by a supporting plate (25.4) of the rear crossmember (25), which projects beyond the recess (25.1) on one or both sides.

3. Loading platform according to Claim 2, **characterized in that** the supporting plate (25.4) is formed by the one limb of a fixing angle which rests on the base of the recess (25.1) and whose other limb (25.7) is fixed to the rear crossmember (25).

4. Loading platform according to Claim 2 or 3, **characterized in that** the guide rails (21) are firmly clamped to the supporting plates (25.4) in each case by means of a clamping plate (25.5), which is inserted into a lower profile compartment (21.1) of the guide rail (21) and is connected to the supporting plate (25.4) by means of screws (25.6) which reach through a guide slot (21.2) on the bottom side of the lower profile compartment (21.1).

5. Loading platform according to one of the preceding claims, **characterized in that** the rear and front crossmembers (24, 25) bear against the underside of the longitudinal chassis members (11).

6. Loading platform according to one of the preceding claims, **characterized in that** the guide rails (21) are in each case firmly clamped at the top to a fixing element (24.1) which engages over them, in particular has a U shape open at the bottom and belongs the front crossmember (24), by means of a clamping plate (24.3), which is inserted into an upper profile compartment (21.3) of the guide rail (21) and is connected to the fixing element (24.1) by means of clamping screws (24.7) which reach through a slot (21.4) on the upper side of the upper profile compartment (21.3).

7. Loading platform according to Claim 6, **characterized in that** the guide rails (21) are spaced apart from the underside of the longitudinal chassis members (11) by the height of the heads of the clamping screws (24.7) and the thickness of the fixing element (24.1).

8. Loading platform according to one of the preceding claims, **characterized in that** the guide mechanism (20) between rear and front crossmember (24, 25) has a central crossmember (23), which is firmly clamped to the longitudinal chassis members (11) and supports the guide rails (21) on the underside and/or upper side.

9. Loading platform according to Claim 8, **characterized in that** the guide rails (21) are in each case firmly connected at the top to a bearer plate (23.4) which engages over them and belongs to the central crossmember (23), by means of a clamping plate (23.10), which is inserted into an upper profile compartment (21.3) of the guide rail (21) and is connected to the bearer plate (23.4) by means of clamping screws (23.7) which reach through a slot (21.4) in the upper side of the upper profile compartment (21.3).

10. Loading platform according to Claim 9, **characterized in that** the guide rails (21) are spaced apart from the underside of the longitudinal chassis members (11) by the height of the heads of the clamping screws (23.7) and the thickness of the bearer plate (23.4).

## Revendications

1. Hayon élévateur de chargement à escamotage inférieur, destiné à un véhicule, comprenant un groupe élévateur (30) pour soulever et abaisser une plate-forme (50), et un groupe de guidage (20) en forme de cadre, qui comporte une traverse avant et arrière (24, 25) pour la fixation à des longerons (11) du véhicule et deux rails de guidage (21) sur lesquels le groupe de levage (30) est maintenu suspendu et peut être déplacé entre une position de travail se trouvant derrière le véhicule et une position de circulation se trouvant sous le véhicule,
**caractérisé en ce que** les rails de guidage (21) sont formés chacun par un profilé creux ouvert, en métal, notamment en aluminium, et sont emmanchés dans un évidement (25.1) de la traverse arrière (25), qui correspond à la section transversale extérieure du rail de guidage (21), et sont fixés à la traverse arrière (21).

2. Hayon élévateur de chargement selon la revendication 1, **caractérisé en ce que** le fond de l'évidement (25.1) est formé par une plaque d'appui (25.4) de la traverse arrière (25), qui dépasse d'un côté ou des deux côtés au-delà de l'évidement (25.1).

3. Hayon élévateur de chargement selon la revendication 2, **caractérisé en ce que** la plaque d'appui (25.4) est formée par l'aile d'une cornière de fixation, qui repose sur le fond de l'évidement (25.1), et dont l'autre aile (25.7) est fixée à la traverse arrière (25).

4. Hayon élévateur de chargement selon la revendication 2 ou 3, **caractérisé en ce que** les rails de guidage (21) sont serrés de manière fixe sur les plaques d'appui (25.4), respectivement au moyen d'une plaque de serrage (25.5) insérée dans un logement de profilé inférieur (21.1) du rail de guidage (21) et reliée à la plaque d'appui (25.4) au moyen de vis (25.6) qui traversent une fente de guidage (21.2) du fond du logement de profilé inférieur (21.1).

5. Hayon élévateur de chargement selon l'une des revendications précédentes, **caractérisé en ce que** la traverse arrière et avant (24, 25) s'appuient sur le côté inférieur des longerons (11).

6. Hayon élévateur de chargement selon l'une des revendications précédentes, **caractérisé en ce que** les rails de guidage (21) sont serrés de manière fixe sur le haut, chacun au niveau d'un élément de fixation (24.1) de la traverse avant (24), qui les surmonte et présente notamment une forme de U ouvert vers le bas, au moyen d'une plaque de serrage (24.3) qui est insérée dans un logement de profilé supérieur (21.3) du rail de guidage (21) et est reliée à l'élément de fixation (24.1) au moyen de vis de serrage (24.7) qui traversent une fente supérieure (21.4) du logement de profilé supérieur (21.3).

7. Hayon élévateur de chargement selon la revendication 6, **caractérisé en ce que** les rails de guidage (21) sont espacés du côté inférieur des longerons (11) d'une distance correspondant à la hauteur de tête des vis de serrage (24.7) et à l'épaisseur de l'élément de fixation (24.1).

8. Hayon élévateur de chargement selon l'une des revendications précédentes, **caractérisé en ce que** le groupe de guidage (20) présente, entre la traverse arrière et avant (24, 25), une traverse centrale (23) qui est serrée de manière fixe sur les longerons (11) et supporte les rails de guidage (21) sur le côté inférieur et/ou supérieur.

9. Hayon élévateur de chargement selon la revendication 8, **caractérisé en ce que** les rails de guidage (21) sont serrés de manière fixe dans le haut, respectivement sur une plaque d'appui (23.4) de la traverse centrale (23), qui les surmonte, au moyen d'une plaque de serrage (23.10) qui est insérée dans un logement de profilé supérieur (21.3) du rail de guidage (21) et est reliée à la plaque d'appui (23.4) au moyen de vis de serrage (23.7) traversant une fente (21.4) sur le côté supérieur du logement de profilé supérieur (21.3).

10. Hayon élévateur de chargement selon la revendication 9, **caractérisé en ce que** les rails de guidage (21) sont espacés du côté inférieur des longerons (11) d'une distance correspondant à la hauteur de tête des vis de serrage (23.7) et à l'épaisseur de la plaque d'appui (23.4).
